# FASCICULE DE BREVET EUROPEEN

(11) **EP 2 118 598 B1**
(45) Date de publication et mention de la délivrance du brevet: **20.12.2017**
(21) Numéro de dépôt: 08762007.6
(22) Date de dépôt: 30.01.2008
(51) Int. Cl.: F25J 3/02

(54) **PROCÉDÉ ET APPAREIL DE PRODUCTION DE MONOXYDE DE CARBONE PAR DISTILLATION CRYOGÉNIQUE**
VERFAHREN UND VORRICHTUNG ZUR HERSTELLUNG VON KOHLENMONOXID DURCH KRYOGENE DESTILLATION
METHOD AND APPARATUS FOR PRODUCING CARBON MONOXIDE BY CRYOGENIC DISTILLATION

(30) Priorité: 01.02.2007 FR 0753001
(43) Date de publication de la demande: 18.11.2009
(73) Titulaire: L'AIR LIQUIDE, Société Anonyme pour l'Etude et l'Exploitation des Procédés Georges Claude, 75007 Paris (FR)
(72) Inventeur: BRIGLIA, ALAIN, F-49140 Corze (FR); DARDE, ARTHUR, F-75005 Paris (FR); HAIK-BERAUD, NATACHA, F-94500 Champigny-sur-marne (FR); KHY, MARIE-KHUNY, F-75321 Paris Cedex 07 (FR)
(74) Mandataire: Mercey, Fiona Susan
(86) Numéro de dépôt international: PCT/FR2008/050147
(87) Numéro de publication internationale: WO 2008/099123

(56) Documents cités:
- US-A- 2 729 954
- US-A- 4 478 621
- US-A- 5 609 040
- BERNINGER R: "FORTSCHRITTE BEI DER H2/CO-TIEFTEMPERATURZERLEGUNG PROGRESS IN H2/CO LOW TEMPERATURE SEPARATION" BERICHTE AUS TECHNIK UND WISSENSCHAFT, LINDE AG, UNTERNEHMENSZENTRALE, UNTERNEHMENSKOMMUNIKATION, WIE, DE, vol. 62, 1988, pages 18-32, XP009045782 ISSN: 0942-332X

## Description

La présente invention est relative à un procédé et à un appareil de production de monoxyde de carbone par distillation cryogénique. Dans les procédés connus de production d'hydrogène et/ou de monoxyde de carbone par distillation cryogénique, il est fréquent d'utiliser une colonne de déazotation pour obtenir des produits très pauvres en azote à partir d'un mélange à séparer contaminé avec de l'azote.

Il peut se produire cependant que la charge d'azote dans le mélange à séparer soit extrêmement réduite, voire nulle par moment, alors que l'unité a été conçue avec une colonne de déazotation. Ce sera ainsi le cas avec un mélange à séparer produit par un SMR alimenté temporairement avec du naphtha. La régulation de pression de la colonne de déazotation se faisant par le contrôle de la purge azote, la pression ne pourra plus être maintenue constante. Cette pression contrôlant celle de la colonne CO/CH₄, généralement en amont de la colonne de déazotation, l'opération de l'unité sera très dégradée par les probables fluctuations.

Une façon d'éviter ces problèmes à relativement peu de frais consiste à installer une nouvelle sortie gaz sur la colonne CO/N₂, préférablement en cuve, et de la connecter au réseau basse pression de monoxyde de carbone. Ainsi, lorsque le débit de la purge azote devient trop faible pour réguler la pression, il suffit d'ouvrir la nouvelle sortie de monoxyde de carbone et de réguler la pression par ce canal. Il faut alors fermer la purge d'azote.

Un procédé selon le préambule de la revendication 1 est connu de US-A-2729954.

Selon un objet de l'invention, il est prévu un procédé de production de monoxyde de carbone par distillation cryogénique utilisant un système de colonnes de distillation alimenté par un mélange comprenant au moins de l'hydrogène, du monoxyde de carbone et au moins une partie du temps de l'azote dans lequel on refroidit le mélange à séparer à une température de distillation, on épure le mélange en hydrogène, on sépare un fluide comprenant au moins du monoxyde de carbone et au moins une partie du temps de l'azote dans une colonne de déazotation pour produire un gaz enrichi en azote et un liquide enrichi en monoxyde de carbone et on soutire du système de colonnes un gaz riche en monoxyde de carbone caractérisé en ce que si la teneur en azote du fluide comprenant au moins du monoxyde de carbone et au moins une partie du temps de l'azote baisse en dessous d'un seuil donné, on soutire un débit riche en monoxyde de carbone de la colonne de déazotation et on varie la pression de la colonne en régulant ce débit riche en monoxyde de carbone.

Selon un autre objet de l'invention, il est prévu un appareil de production de monoxyde de carbone par distillation cryogénique utilisant un système de colonnes de distillation alimenté par un mélange comprenant au moins de l'hydrogène, du monoxyde de carbone et au moins une partie du temps de l'azote comprenant des moyens pour refroidir le mélange à séparer à une température de distillation, des moyens pour épurer le mélange en hydrogène, une colonne de déazotation pour séparer un fluide comprenant au moins du monoxyde de carbone et au moins une partie du temps de l'azote afin de produire un gaz enrichi en azote et un liquide enrichi en monoxyde de carbone et des moyens pour soutirer du système de colonnes un gaz riche en monoxyde de carbone, des moyens pour soutirer un gaz riche en monoxyde de carbone de la colonne de déazotation et des moyens pour varier la pression de la colonne de déazotation en régulant ce débit riche en monoxyde de carbone, caractérisé en ce que la colonne de déazotation a un condenseur de tête, des moyens pour envoyer un liquide de cuve de la colonne de déazotation au condenseur de tête, des moyens pour soutirer le liquide de cuve vaporisé du condenseur de tête et des moyens pour mélanger le liquide de cuve vaporisé avec le gaz riche en monoxyde de carbone.

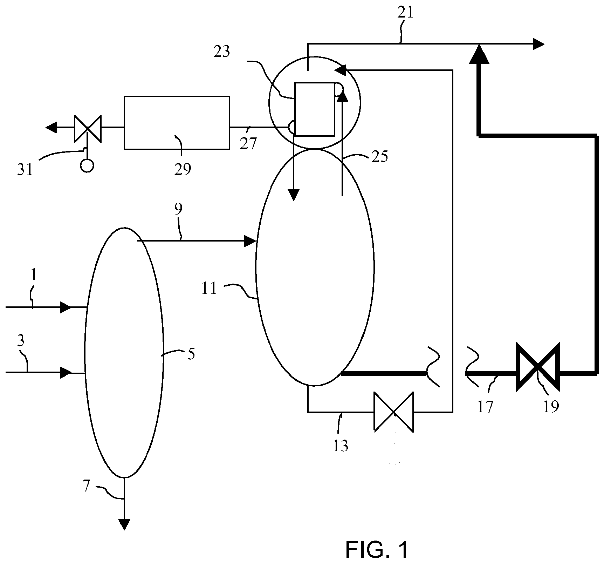

L'invention sera décrite en plus de détail en se référant à la figure qui illustre un appareil de production de monoxyde de carbone selon l'invention.

L'appareil comprend au moins deux colonnes de distillation, dont une colonne CO/CH₄ 5 et une colonne de déazotation 11.

L'appareil peut faire partie d'une installation avec une étape de lavage au méthane ou une étape de condensation partielle en amont de la colonne CO/CH₄ pour épurer le mélange à séparer en hydrogène La colonne de déazotation peut également se trouver en amont de la colonne CO/CH₄.

La colonne CO/CH₄ est alimentée par deux débits 1, 3 à des niveaux différents et produit un liquide riche en méthane 7 et un fluide 9 riche en monoxyde de carbone 9 mais contenant de l'azote au moins de temps en temps. Le fluide 9 est envoyé à la colonne de déazotation 11 en partie supérieure de la colonne. Le liquide de cuve 13 est envoyé à un condenseur de tête 23 de la colonne de déazotation 11 afin de condenser l'azote 25. Un débit de purge 27 est soutiré du condenseur 23, envoyé à un échangeur de chaleur 29 où il se vaporise et détendu dans une vanne 31. La pression de la colonne de déazotation 11 est maintenue au moyen du débit de purge 27.

Si la teneur en azote du débit 9 baisse en dessous d'un seuil donné, la pression de la colonne 11 ne peut plus être maintenue avec le débit de purge. Dans ce cas, on soutire, en cuve de la colonne de déazotation, un débit de monoxyde de carbone gazeux 17. En régulant l'ouverture de la vanne 19, on peut varier le débit 17 et ainsi la pression de la colonne de déazotation 11 et ainsi la pression de la colonne CO/CH₄. Le monoxyde de carbone 17 est mélangé avec le liquide vaporisé 21 provenant du condenseur 23.

Les débits 13, 21 et 25 peuvent être nuls.

## Revendications

1. Procédé de production de monoxyde de carbone par distillation cryogénique utilisant un système de colonnes de distillation alimenté par un mélange comprenant au moins de l'hydrogène, du monoxyde de carbone et au moins une partie du temps de l'azote dans lequel on refroidit le mélange à séparer à une température de distillation, on épure le mélange en hydrogène, on sépare un fluide comprenant au moins du monoxyde de carbone et au moins une partie du temps de l'azote dans une colonne de déazotation (11) pour produire un gaz enrichi en azote et un liquide enrichi en monoxyde de carbone et on soutire du système de colonnes un gaz riche en monoxyde de carbone **caractérisé en ce que** si la teneur en azote du fluide comprenant au moins du monoxyde de carbone et au moins une partie du temps de l'azote baisse en dessous d'un seuil donné, on soutire un débit (17) riche en monoxyde de carbone de la colonne de déazotation et on varie la pression de la colonne en régulant ce débit riche en monoxyde de carbone.

2. Appareil de production de monoxyde de carbone par distillation cryogénique utilisant un système de colonnes de distillation alimenté par un mélange comprenant au moins de l'hydrogène, du monoxyde de carbone et au moins une partie du temps de l'azote comprenant des moyens pour refroidir le mélange à séparer à une température de distillation, des moyens pour épurer le mélange en hydrogène, une colonne de déazotation (11) pour séparer un fluide comprenant au moins du monoxyde de carbone et au moins une partie du temps de l'azote, dérivé du mélange, afin de produire un gaz enrichi en azote et un liquide enrichi en monoxyde de carbone et des moyens pour soutirer du système de colonnes un gaz riche en monoxyde de carbone des moyens pour soutirer un débit riche en monoxyde de carbone (17) de la colonne de déazotation et des moyens (19) pour varier la pression de la colonne de déazotation en régulant ce débit riche en monoxyde de carbone, **caractérisé en ce que** la colonne de déazotation (11) a un condenseur de tête (23), des moyens pour envoyer un liquide de cuve (13) de la colonne de déazotation au condenseur de tête, des moyens pour soutirer le liquide de cuve vaporisé (21) du condenseur de tête et des moyens pour mélanger le liquide de cuve vaporisé avec le débit riche en monoxyde de carbone (17).

## Patentansprüche

1. Verfahren zur Herstellung von Kohlenmonoxid durch kryogene Destillation unter Verwendung eines Destillationssäulensystems, das von einem Gemisch gespeist wird, das mindestens Wasserstoff, Kohlenmonoxid und mindestens einen Teil der Zeit Stickstoff umfasst, wobei das zu trennende Gemisch auf eine Destillationstemperatur gekühlt wird, das Gemisch von Wasserstoff gereinigt wird, ein Fluid, das mindestens Kohlenmonoxid und mindestens einen Teil der Zeit Stickstoff umfasst, in einer Entstickungssäule (11) getrennt wird, um ein stickstoffangereichertes Gas und eine kohlenmonoxidangereicherte Flüssigkeit herzustellen, und ein kohlenmonoxidreiches Gas aus dem Säulensystem abgezogen wird, **dadurch gekennzeichnet, dass** wenn der Stickstoffgehalt des Fluids, das mindestens Kohlenmonoxid und mindestens einen Teil der Zeit Stickstoff umfasst, unter eine gegebene Schwelle absinkt, ein kohlenmonoxidreicher Strom (17) aus der Entstickungssäule abgezogen wird und der Druck der Säule verändert wird, indem man diesen kohlenmonoxidreichen Strom regelt.

2. Vorrichtung zur Herstellung von Kohlenmonoxid durch kryogene Destillation unter Verwendung eines Destillationssäulensystems, das von einem Gemisch gespeist wird, das mindestens Wasserstoff, Kohlenmonoxid und mindestens einen Teil der Zeit Stickstoff umfasst, umfassend Mittel zum Kühlen des zu trennenden Gemisches auf eine Destillationstemperatur, Mittel zum Reinigen des Gemisches von Wasserstoff, eine Entstickungssäule (11) zum Trennen eines aus dem Gemisch abgeleiteten Fluids, das mindestens Kohlenmonoxid und mindestens einen Teil der Zeit Stickstoff umfasst, um ein stickstoffangereichertes Gas und eine kohlenmonoxidangereicherte Flüssigkeit herzustellen, und Mittel, um ein kohlenmonoxidreiches Gas aus dem Säulensystem abzuziehen, Mittel, um einen kohlenmonoxidreichen Strom (17) aus der Entstickungssäule abzuziehen, und Mittel (19), um den Druck der Entstickungssäule zu verändern, indem man diesen kohlenmonoxidreichen Strom regelt, **dadurch gekennzeichnet, dass** die Entstickungssäule (11) einen Kopfkondensator (23), Mittel, um eine Sumpfflüssigkeit (13) der Entstickungssäule zum Kopfkondensator zu schicken, Mittel, um die verdampfte Sumpfflüssigkeit (21) aus dem Kopfkondensator abzuziehen, und Mittel, um die verdampfte Sumpfflüssigkeit mit dem kohlenmonoxidreichen Strom (17) zu mischen, besitzt.

## Claims

1. Method for producing carbon monoxide via cryogenic distillation using a system of distillation columns supplied with a mixture comprising at least hydrogen, carbon monoxide and at least part of the time nitrogen, wherein the mixture to be separated is cooled to a distillation temperature, the mixture is purified of hydrogen, a fluid comprising at least carbon monoxide and at least part of the time nitrogen is separated in a denitrogenation column (11) in order to produce a gas rich in nitrogen and a liquid rich in carbon monoxide and a gas rich in carbon monoxide is removed from the system of columns **characterised in that**, if the nitrogen concentration of the fluid comprising at least carbon monoxide and at least part of the time nitrogen falls below a given threshold, a flow (17) rich in carbon monoxide is removed from the denitrogenation column and the pressure in the column is varied by adjusting this flow rich in carbon monoxide.

2. Apparatus for producing carbon monoxide via cryogenic distillation using a system of distillation columns supplied with a mixture comprising at least hydrogen, carbon monoxide and at least part of the time nitrogen, comprising means for cooling the mixture to be separated to a distillation temperature, means for purifying the mixture of hydrogen, a denitrogenation column (11) for separating a fluid comprising at least carbon monoxide and at least part of the time nitrogen, derived from the mixture, in order to produce a gas rich in nitrogen and a liquid rich in carbon monoxide and means for removing a gas rich in carbon monoxide from the system of columns means for removing a flow (17) rich in carbon monoxide from the denitrogenation column and means (19) for varying the pressure of the denitrogenation column by adjusting this flow rich in carbon monoxide, **characterised in that** the denitrogenation column (11) has a top condenser (23), means for sending a bottom liquid (13) from the denitrogenation column to the top condenser, means for removing the vaporised bottom liquid (21) from the top condenser and means for mixing the vaporised bottom liquid with the flow rich in carbon monoxide (17).
